# EUROPÄISCHE PATENTSCHRIFT

(11) **EP 3 245 101 B1**
(45) Veröffentlichungstag und Bekanntmachung des Hinweises auf die Patenterteilung: **15.02.2023**
(21) Anmeldenummer: 16701099.0
(22) Anmeldetag: 13.01.2016
(51) Int. Cl.: B60Q 1/14, B60Q 1/40

(54) **LENKSTOCKSCHALTER FÜR EIN KRAFTFAHRZEUG**
STEERING COLUMN SWITCH FOR A MOTOR VEHICLE
COMMUTATEUR DE COLONNE DE DIRECTION POUR VÉHICULE AUTOMOBILE

(30) Priorität: 14.01.2015 DE 102015000419
(43) Veröffentlichungstag der Anmeldung: 22.11.2017
(73) Patentinhaber: KOSTAL Automobil Elektrik GmbH & Co. KG, 58513 Lüdenscheid (DE)
(72) Erfinder: SCHLANZKE, Benjamin, 58509 Lüdenscheid (DE); HIRSCHFELD, Klaus, 58515 Lüdenscheid (DE)
(74) Vertreter: Kerkmann, Detlef
(86) Internationale Anmeldenummer: PCT/EP2016/050527
(87) Internationale Veröffentlichungsnummer: WO 2016/113282

(56) Entgegenhaltungen:
- EP-A2- 1 177 942
- DE-A1- 2 849 686
- DE-A1- 10 039 135
- DE-A1- 19 918 566
- DE-A1-102006 052 108
- DE-A1-102008 037 080
- DE-A1-102012 203 095
- JP-A- S 608 134
- RU-U1- 149 217
- US-A1- 2015 035 669

## Beschreibung

Die Erfindung betrifft einen Lenkstockschalter für ein Kraftfahrzeug, mit einem durch Verschwenken gegen ein Schalthebelgehäuse betätigbaren Schalthebel, wobei der Schalthebel bei unbetätigtem Schalthebel an der Schaltkulisse eine stabile Schaltposition einnimmt und durch eine Betätigung des Schalthebels in wenigstens eine an der Schaltkulisse instabile Schaltposition geführt werden kann, wobei nach Wegfall der Betätigung des Schalthebels der Schalthebel aus jeder an der Schaltkulisse instabilen Schaltposition in die stabile Schaltposition zurückführbar ist, wobei zusammen mit dem Schalthebel gegen das Schalthebelgehäuse ein Schaltstück verschwenkbar ist, an dem mindestens ein Permanentmagnet angeordnet ist, welcher durch eine Verschwenkung des Schalthebels in eine an der Schaltkulisse instabile Schaltposition mit einem magnetischen Halteelement zusammenführt wird, und wobei ein Elektromagnet vorgesehen ist, der im eingeschalteten Zustand ein Gegenfeld zum Magnetfeld des Permanentmagneten erzeugt.

Ein derartiger Lenkstockschalter ist aus dem Dokument RU 149 217 U1 bekannt.

Aus der deutschen Offenlegungsschrift DE 28 49 686 A1 ist ein Lenkstockschalter für ein Kraftfahrzeug bekannt, bei dem der betätigte Schalthebel durch Elektromagnete in der ausgelenkten Position gehalten wird. Gemäß der Figur 4 dieses Dokuments wird durch das Auslenken eines Schaltglieds 69 über eine Kontaktbrücke 71 eines der Kontaktpaare 76/75 bzw. 76/77 geschlossen. Hierdurch wird ein zugehöriger Elektromagnet 30 bzw. 30a bestromt, wodurch dieser einen Weicheisenbügel 78 und damit das Schaltglied in der ausgelenkten Position hält. Das geschlossene Kontaktpaar bleibt dadurch geschlossen und bildet einen Haltekontakt für den gerade eingeschalteten Elektromagneten aus. Das Zurücksetzen des Schaltglieds erfolgt über das Betätigen eines Schalters 41 bzw. 42 mit Öffnerkontakten durch eine Rückstelleinrichtung 40. Der jeweilige Elektromagnet wird dadurch abgeschaltet.

Lenkstockschalter werden in Kraftfahrzeugen zur Steuerung vielfältigster Funktionen vorgesehen. Übliche Anwendungen für Lenkstockschalter sind Fahrtrichtungsanzeiger, die Fahrzeugbeleuchtung, Umschaltung von Abblendzu Fernlicht, Lichthupe, sowie die Scheibenwisch- und Waschsteuerung. Betätigt werden Lenkstockschalter mitunter durch Drehen um die Längsachse, im Allgemeinen aber durch ein Verschwenken gegen ein Schalthebelgehäuse. Dabei kann zwischen rastend und tastend ("Tippfunktion") schaltenden Lenkstockschaltern unterschieden werden, je nachdem, ob der Schalthebel nach dem Verschwenken seine Schaltstellung beibehält bis er manuell oder durch eine Rückstellvorrichtung zurückgesetzt wird, oder aber nach Ende der Betätigung unmittelbar in seine stabile Ausgangslage zurückgeführt wird. Beispielsweise weisen Lenkstockschalter für Fahrtrichtungsanzeiger, im Folgenden auch kurz als Blinkgeberschalter bezeichnet, üblicherweise drei Schaltstellungen auf, von denen zumindest die die Fahrtrichtungsanzeiger nicht aktivierende mittlere Schaltstellung vom Schalthebel stabil eingenommen werden kann.

Schon seit langem sind Blinkgeberschalter in Gebrauch, bei der der Schalthebel auch in den beiden Schaltstellungen für Fahrtrichtung rechts und Fahrtrichtung links, etwa durch eine Rastkurvenmechanik, in jeweils einer stabilen Stellung gehalten wird. Nach Durchfahren einer Kurve löst dann eine mit der Fahrzeuglenkung gekoppelte mechanische Auslösevorrichtung den Schalthebel aus der Rastposition, wodurch dieser in die neutrale Mittelstellung zurückgeworfen wird.

Modernere Ausführungen von Blinkgeberschaltern erfassen oftmals die Auslenkung des Schalthebels nach rechts oder links jeweils als Tastschalter und starteten dementsprechend über eine Elektronik die Ansteuerung der Fahrtrichtungsanzeiger für die zugehörige Fahrzeugseite. Der Schalthebel geht nach einer betätigenden Auslenkung wieder selbsttätig in seine Mittelstellung zurück, während die Ansteuerung der Blinklampen nach Durchfahren einer Kurve durch ein elektrisches Signal von der Lenksäule gestoppt wird. Durch den Verzicht auf ein mechanisch erfolgendes Zurücksetzen des Schalthebels sind der mechanische Aufbau dieser Lenkstockschalter und auch der mechanische Aufbau der Lenksäule gegenüber der zuvor genannten Ausführung deutlich vereinfacht.

Allgemein nachteilig bei einem tippend betätigten Lenkstockschalter ist, dass der Schaltzustand der damit betätigten Schaltfunktion nicht mehr einfach anhand der Schalthebelstellung erkennbar ist. Hierdurch fehlt eine optische beziehungsweise haptische Rückmeldung, wodurch die Schalterbetätigung von vielen Anwendern nicht als intuitiv erfassbar empfunden wird.

Es stellte sich daher die Aufgabe, für einen Lenkstockschalter, der mittels einer Schaltkulisse eine oder mehrere elektrische Tippfunktionen realisiert, eine Schalthebelmechanik zu schaffen, bei der der eingestellte Schaltzustand anhand der Schalthebelstellung erkennbar ist und bei der Schalthebel auf einfache Weise in seine Grundstellung überführt werden kann.

Diese Aufgabe wird erfindungsgemäß dadurch gelöst, dass der Schalthebel einen an einer Schaltkulisse geführten Rastbolzen aufweist, dass der Rastbolzen bei unbetätigtem Schalthebel an der Schaltkulisse eine stabile Schaltposition einnimmt, dass das Schaltstück zusammen mit dem Schalthebel in Form einer zweiarmigen Gabel ausgebildet ist, an deren beiden Gabelarmen jeweils ein Permanentmagnet angeordnet ist, und dass das Schaltstück durch eine Betätigung des Schalthebels gegen ein feststehendes Gehäuseteil des Schalthebelgehäuses verschwenkbar ist, an dem ortsfest der

Elektromagnet angeordnet ist, dessen Magnetspule sich bei einem nicht betätigtem Schalthebel genau zwischen den beiden Gabelarmen des Schaltstücks befindet.

Der erfindungsgemäß ausgeführte Lenkstockschalter sieht somit die Kombination eines an einer Schaltkulisse monostabil geführten Schalthebels mit einer magnetischen Vorrichtung zum Halten beziehungsweise zum Lösen des Schalthebels vor.

Zu der magnetischen Vorrichtung gehört ein am Schalthebelgehäuse verschwenkbares Schaltstück, an welchem mehrere Permanentmagnete angeordnet sind, sowie ein am Schalthebelgehäuse angeordneter Elektromagnet. Die genannten Elemente können konstruktiv relativ einfach einem gebräuchlichen Lenkstockschalter mit einer Tippfunktionsmechanik hinzugefügt werden.

Das magnetische Halteelement ist durch einen ferromagnetischen oder permanentmagnetischen Körper ausführbar und kann besonders einfach durch den Magnetkern des Elektromagneten ausgebildet sein.

Vorteilhaft kann an einem feststehenden Gehäuseteil des Lenkstockschalters mindestens ein Magnetsensor angeordnet sein, der die Magnetfeldstärke des mindestens einen der Permanentmagnete am Sensorort erfasst. Durch Auswertung der Ausgangssignale des Magnetsensors kann die Lage des Schaltstücks relativ zu diesem Gehäuseteil und damit die Schaltstellung des Schalthebels berührungsfrei erfasst werden, wodurch auf die Verwendung konventioneller, einander berührender und damit dem Verschleiß unterliegender Schaltkontakte verzichtet werden kann.

Im Folgenden soll ein Ausführungsbeispiel der Erfindung anhand der Zeichnung dargestellt und erläutert werden. Es zeigen
- Figur 1: die Schnittansicht eines erfindungsgemäßen Lenkstockschalters,
- Figuren 2 bis 4: jeweils eine schematische Darstellung der Mechanik zum Arretieren und Lösen eines Schalthebels in verschiedenen Betätigungsstellungen.

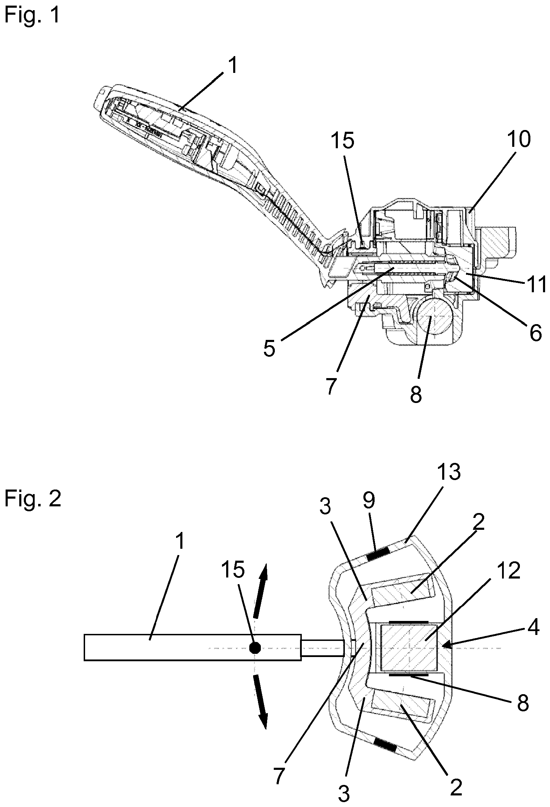

Anhand der Figur 1 soll zunächst anhand einer Schnittansicht eines erfindungsgemäßen Lenkstockschalters dessen prinzipieller Aufbau erläutert werden. Der Lenkstockschalter weist als Betätigungselement einen Schalthebel 1 auf, der an einem Schalthebelgehäuse 10 verschwenkbar gelagert ist. Die Verschwenkung des Schalthebels 1 um die am Schalthebelgehäuse 10 gehaltene Schwenkachse 15 bewegt einen mit dem Schalthebel 1 gekoppelten Rastbolzen 5 entlang der Kontur 6 einer Schaltkulisse 11. An der gleichen Schwenkachse 15 ist ein Schaltstück 7 gelagert, das mechanisch mit dem Schalthebel 1 gekoppelt ist und dessen Schwenkbewegung um die Schwenkachse 15 folgt.

Es sei angenommen, dass der Schalthebel 1 in seiner unbetätigten Mittelstellung eine stabile Rastposition an der Kontur 6 einnimmt. Von dieser Mittelstellung aus sind zwei ausgelenkte Stellungen einstellbar, in denen der Rastbolzen 5 aus der Mittelstellung, bezogen auf die Zeichnungsebene, nach vorne oder hinten verschoben ist. Diese ausgelenkten Stellungen sind jedoch nicht stabil, was bedeutet, dass der Schalthebel 1 nach dem Loslassen durch die Kontur 6 selbsttätig in seine Mittelstellung zurückgeführt wird. Dieses entspricht einer tippenden Betätigung des Schalthebels 1 beziehungsweise einer Tastbetätigung von, hier nicht dargestellten, elektrischen Schaltelementen.

Eine tippende Betätigung des Schalthebels 1 reicht zum Starten einer elektronisch gesteuerten Schaltfunktion zwar ohne weiteres aus, hat aber den Nachteil, dass der eingestellte Schaltzustand nicht haptisch erfahrbar beziehungsweise nicht visuell durch die Stellung des Schalthebels 1 erkennbar ist. Ein ähnliches Problem wie bei den eingangs beschriebenen Blinkgeberschaltern ergibt sich auch bei tippend betätigten Lenkstockschaltern, welche die Scheibenwischanlage eines Kraftfahrzeugs steuern. Bei derartigen Lenkstockschaltern ist beispielsweise zeitweise nicht erkennbar ist, ob sich die Scheibenwischer im Pausenzustand eines Intervallbetriebs befinden oder aber gänzlich abgeschaltet sind. Diese Ungewissheit kann beim Anwender zu Irritationen führen.

Es ist daher erfindungsgemäß vorgesehen, dass der Schalthebel 1 nach einer Betätigung, für die Zeit, in der die gewählte Funktion aktiv sein soll in der eingestellten Betätigungsstellung gehalten wird, und danach, in seine stabile Ausgangsstellung zurückgestellt werden soll. Das Zurückstellen erfolgt dabei jedoch nicht durch eine externe mechanische Rückstellvorrichtung, sondern durch eine elektrische Ansteuerung, die auf einem vorzugsweise automatisch erzeugten elektrischen Signal beruhen kann.

Bei einem Blinkgeberschalter kann so beispielsweise durch ein einfaches aus der Lenkradstellbewegung, die in modernen Kraftfahrzeugen bereits standardmäßig durch eine elektronische Sensorik erfasst wird, abgeleitetes Signal erreicht werden, dass das Blinken der Fahrtrichtungsanzeigeleuchten nach einem Abbiegevorgang automatisch beendet wird und auch der Lenkstockschalter in seine Ausgangsstellung zurückgesetzt wird.

Der Lenkstockschalter sieht dazu einen einfachen Mechanismus vor, der durch die skizzenhaften Darstellungen der Figuren 2 bis 4 verdeutlicht werden soll. Wie bereits erwähnt wurde, ist der Schalthebel 1 mechanisch mit einem Schaltstück 7 gekoppelt. Das Schaltstück 7 bildet hier zusammen mit dem Schalthebel 1 die Form einer zweiarmigen Gabel aus, an deren beiden Gabelarmen 3 jeweils ein Permanentmagnet 2 angeordnet ist.

Das Schaltstück 7 ist durch eine Betätigung des Schalthebels 1 gegen ein feststehendes Gehäuseteil 13 des Schalthebelgehäuses 10 verschwenkbar. An diesem Gehäuseteil 13 ist ortsfest ein Elektromagnet 4 angeordnet, dessen Magnetspule 12 sich hier bei einem nicht betätigtem Schalthebel 1 genau zwischen den beiden Gabelarmen 3 des Schaltstücks 7 befindet. Der aus einem ferromagnetischen Material bestehende Spulenkern 8 der Magnetspule 12 ragt beidseitig aus der Magnetspule 12 heraus. Dabei sind die Stirnflächen des Spulenkerns 8 zu den beiden Permanentmagnete 2 hin ausgerichtet.

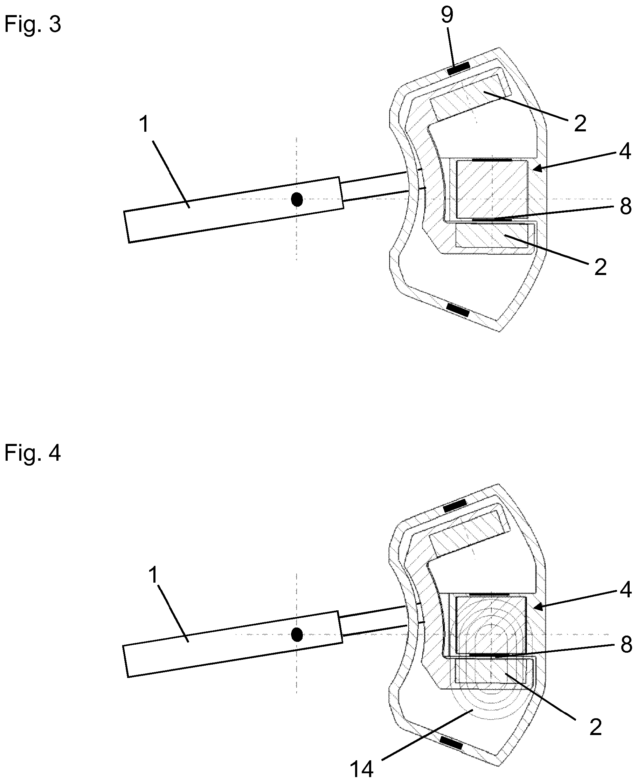

Bei einem Verschwenken des Schalthebels 1 in eine der beiden Betätigungsrichtungen kommt so entweder der eine oder der andere der beiden Permanentmagnete 2 am einer Stirnfläche des Spulenkerns 8 zur Anlage und wird danach durch die Magnetkraft des Permanentmagneten 2 am Spulenkern 8 festgehalten. Dadurch ergibt sich beispielsweise die in der Figur 3 dargestellte Anordnung, in welcher der Schalthebel 1 in der zuletzt eingestellten Schaltstellung gehalten wird.

Um den Permanentmagneten 2 vom Spulenkern 8 zu lösen, wird der Elektromagnet 4 durch eine hier nicht dargestellte elektronische Ansteuerungsvorrichtung derart bestromt, dass das von dem Elektromagneten 4 erzeugte Magnetfeld dem Magnetfeld des Permanentmagneten 2 entgegenwirkt und dieses möglichst gut kompensiert. Das durch den Elektromagneten 4 erzeugte magnetische Gegenfeld 14 ist in der Figur 4 durch skizzierte Feldlinien angedeutet, die sowohl durch den Elektromagneten 4 als auch durch den am Spulenkern 8 des Elektromagneten 4 anliegenden Permanentmagneten 2 verlaufen.

Kompensieren sich die beiden entgegengesetzt wirkenden Magnetfelder ausreichend gut, so gewinnt die rückführenden Wirkung der Schaltkulisse 11 überhand, welche den Schalthebel 1 und damit auch das damit verbundene Schaltstück 7 in seine bereits in der Figur 2 dargestellte Ausgangslage zurückführt.

Vorteilhafterweise kann die Schaltstellung des Schalthebels 1 kontaktlos und verschleißfrei durch einen oder durch mehrere am Gehäuseteil 13 angeordnete Magnetsensoren 9 erfasst werden, da die von den Magnetsensoren 9 erfassten Magnetfeldfeldstärken in eindeutiger Weise von den Positionen der Permanentmagnete 2 relativ zum Gehäuseteil 13 und damit von der aktuell vorliegenden Schalthebelstellung abhängen.

### Bezugszeichen

- 1: Schalthebel
- 2: Permanentmagnet(e)
- 3: Gabelarme
- 4: Elektromagnet
- 5: Rastbolzen
- 6: Kontur
- 7: Schaltstück
- 8: Spulenkern (Halteelement)
- 9: Magnetsensor
- 10: Schalthebelgehäuse
- 11: Schaltkulisse
- 12: Magnetspule
- 13: Gehäuseteil
- 14: Gegenfeld
- 15: Schwenkachse

## Patentansprüche

1. Lenkstockschalter für ein Kraftfahrzeug, mit einem durch Verschwenken gegen ein Schalthebelgehäuse (10) betätigbaren Schalthebel (1), der einen an einer Schaltkulisse (11) geführten Rastbolzen (5) aufweist, wobei der Schalthebel (1) mit dem Rastbolzen (5) bei unbetätigtem Schalthebel (1) an der Schaltkulisse (11) eine stabile Schaltposition einnimmt und durch eine Betätigung des Schalthebels (1) in wenigstens eine an der Schaltkulisse (11) instabile Schaltposition geführt werden kann, wobei nach Wegfall der Betätigung des Schalthebels (1) der Schalthebel (1) aus jeder an der Schaltkulisse (11) instabilen Schaltposition in die an der Schaltkulisse (11) stabile Schaltposition zurückführbar ist,
wobei zusammen mit dem Schalthebel (1) gegen das Schalthebelgehäuse (10) ein Schaltstück (7) verschwenkbar ist, an dem mindestens ein Permanentmagnet (2) angeordnet ist, welcher durch eine Verschwenkung des Schalthebels (1) in der an der Schaltkulisse (11) instabile Schaltposition mit einem magnetischen Halteelement (8) zusammenführt wird, und
wobei ein Elektromagnet (4) vorgesehen ist, der im eingeschalteten Zustand ein Gegenfeld (14) zum Magnetfeld des Permanentmagneten (2) erzeugt,
wobei das Schaltstück (7) zusammen mit dem Schalthebel (1) in Form einer zweiarmigen Gabel ausgebildet ist, an deren beiden Gabelarmen (3) jeweils ein Permanentmagnet (2) angeordnet ist, und
wobei das Schaltstück (7) durch eine Betätigung des Schalthebels (1) gegen ein feststehendes Gehäuseteil (13) des Schalthebelgehäuses (10) verschwenkbar ist, an dem ortsfest der Elektromagnet (4) angeordnet ist, dessen Magnetspule (12) sich bei einem nicht betätigtem Schalthebel (1) genau zwischen den beiden Gabelarmen (3) des Schaltstücks (7) befindet.

2. Lenkstockschalter nach Anspruch 1, **dadurch gekennzeichnet, dass** mindestens ein Magnetsensor (9) vorgesehen ist, der ein von der relativen Position des mindestens eines der Permanentmagnete (2) abhängiges Ausgangssignal erzeugt.

3. Lenkstockschalter nach Anspruch 1, **dadurch gekennzeichnet, dass** das Halteelement (8) aus einem ferromagnetischen Material besteht und/oder ein Permanentmagnet ist.

4. Lenkstockschalter nach Anspruch 1, **dadurch gekennzeichnet, dass** das Halteelement (8) der Spulenkern des Elektromagneten (4) ist.

5. Lenkstockschalter nach Anspruch 1, **dadurch gekennzeichnet, dass** der Lenkstockschalter einen Blinkgeberschalter für ein Kraftfahrzeug ausbildet.

6. Lenkstockschalter nach Anspruch 1, **dadurch gekennzeichnet, dass** der Lenkstockschalter einen Scheibenwischerschalter für ein Kraftfahrzeug ausbildet.

## Claims

1. Steering column switch for a motor vehicle,
having a gearstick lever (1) which can be actuated by pivoting against a gearstick lever housing (10) and has a detent pin (5) guided on a gearstick gate (11),
wherein the shift lever (1) with the detent pin (5) assumes a stable shift position on the shift gate (11) when the shift lever (1) is not actuated and can be guided into at least one shift position which is unstable on the shift gate (11) by actuation of the shift lever (1),
wherein, after the actuation of the shift lever (1) has ceased, the shift lever (1) can be returned from any shift position which is unstable on the shift gate (11) into the shift position which is stable on the shift gate (11),
wherein together with the shift lever (1) a shift member (7) is pivotable against the shift lever housing (10), on which shift member at least one permanent magnet (2) is arranged, which is brought together with a magnetic holding element (8) by a pivoting of the shift lever (1) in the shift position which is unstable on the shift gate (11), and
wherein an electromagnet (4) is provided which, in the switched-on state, generates an opposing field (14) to the magnetic field of the permanent magnet (2),
wherein the switching piece (7) together with the switching lever (1) is constructed in the form of a two-armed fork, on each of the two fork arms (3) of which a permanent magnet (2) is arranged, and wherein the switching piece (7) can be pivoted against a stationary housing part (13) of the switching lever housing (10) by an actuation of the switching lever (1), on which the electromagnet (4) is arranged in a stationary manner, the solenoid (12) of which is located precisely between the two fork arms (3) of the switching piece (7) when the switching lever (1) is not actuated.

2. Steering column switch according to claim 1, **characterised in that** at least one magnetic sensor (9) is provided which generates an output signal dependent on the relative position of at least one of the permanent magnets (2).

3. Steering column switch according to claim 1, **characterised in that** the holding element (8) consists of a ferromagnetic material and/or is a permanent magnet.

4. Steering column switch according to claim 1, **characterised in that** the holding element (8) is the coil core of the electromagnet (4).

5. Steering column switch according to claim 1, **characterised in that** the steering column switch forms a flasher switch for a motor vehicle.

6. Steering column switch according to claim 1, **characterised in that** the steering column switch forms a windscreen wiper switch for a motor vehicle.

## Revendications

1. Commutateur de colonne de direction pour un véhicule automobile,
avec un levier de commande (1) pouvant être actionné par pivotement contre un boîtier de levier de commande (10), qui présente un boulon d'arrêt (5) guidé sur une coulisse de commande (11),
le levier de changement de vitesse (1) avec le boulon d'arrêt (5) prenant une position de changement de vitesse stable sur la coulisse de changement de vitesse (11) lorsque le levier de changement de vitesse (1) n'est pas actionné et pouvant être amené dans au moins une position de changement de vitesse instable sur la coulisse de changement de vitesse (11) par un actionnement du levier de changement de vitesse (1),
dans lequel, après la suppression de l'actionnement du levier de changement de vitesse (1), le levier de changement de vitesse (1) peut être ramené de chaque position de changement de vitesse instable sur la coulisse de changement de vitesse (11) dans la position de changement de vitesse stable sur la coulisse de changement de vitesse (11),
une pièce de commutation (7) pouvant pivoter avec le levier de commutation (1) contre le boîtier de levier de commutation (10), pièce sur laquelle est disposé au moins un aimant permanent (2) qui est amené avec un élément de retenue magnétique (8) par un pivotement du levier de commutation (1) dans la position de commutation instable sur la coulisse de commutation (11), et
un électroaimant (4) étant prévu qui, à l'état enclenché, génère un champ opposé (14) au champ magnétique de l'aimant permanent (2),
la pièce de commutation (7) étant réalisée avec le levier de commutation (1) sous la forme d'une fourche à deux bras, sur les deux bras de fourche (3) de laquelle est disposé respectivement un aimant permanent (2), et la pièce de commutation (7) pouvant être pivotée par un actionnement du levier de commutation (1) contre une partie de boîtier fixe (13) du boîtier de levier de commutation (10), sur laquelle est
disposé de manière fixe l'électroaimant (4) dont la bobine magnétique (12) se trouve exactement entre les deux bras de fourche (3) de la pièce de commutation (7) lorsque le levier de commutation (1) n'est pas actionné.

2. Commutateur de colonne de direction selon la revendication 1, **caractérisé en ce qu'**il est prévu au moins un capteur magnétique (9) qui génère un signal de sortie dépendant de la position relative d'au moins un des aimants permanents (2).

3. Commutateur de colonne de direction selon la revendication 1, **caractérisé en ce que** l'élément de retenue (8) est constitué d'un matériau ferromagnétique et/ou est un aimant permanent.

4. Commutateur de colonne de direction selon la revendication 1, **caractérisé en ce que** l'élément de retenue (8) est le noyau de la bobine de l'électroaimant (4).

5. Commutateur de colonne de direction selon la revendication 1, **caractérisé en ce que** le commutateur de colonne de direction forme un commutateur de clignotant pour un véhicule automobile.

6. Commutateur de colonne de direction selon la revendication 1, **caractérisé en ce que** le commutateur de colonne de direction est un commutateur d'essuie-glace pour un véhicule automobile de la voiture.
